# EUROPÄISCHE PATENTANMELDUNG

(11) **EP 0 842 745 A1**
(43) Veröffentlichungstag der Anmeldung: **20.05.1998**
(21) Anmeldenummer: 97119897.3
(22) Anmeldetag: 13.11.1997
(51) Int. Cl.: B25J 9/08, B25J 18/02, B25J 9/14, B25J 17/02

(54) **Handhabungsvorrichtung**

(30) Priorität: 14.11.1996 DE 29619774 U
(71) Anmelder: Cramer, Thomas, Dipl.-Ing., 28857 Syke (DE)
(72) Erfinder: Cramer, Thomas, Dipl.-Ing., 28857 Syke (DE)
(74) Vertreter: Möller, Friedrich, Dipl.-Ing.

(57) **Zusammenfassung**

Handhabungsvorrichtung mit einem in mehreren Freiheitsgraden bewegbaren Greifmittel.

Bekannte Handhabungsvorrichtungen müssen bei verschiedenen Anforderungen hinsichtlich der Freiheitsgrade des Greifmittels umgerüstet werden. Die neue Handhabungsvorrichtung soll bei geringem Aufwand individuell an die jeweiligen Einsatzbedingungen anpaßbar sein. Dies wird dadurch erreicht, daß die Verbindungsstelle zweier Teile der Handhabungsvorrichtung austauschbar gestaltet ist oder an der Verbindungsstelle drehbare, verschiebliche oder verfahrbare Organe angeordnet sind.

Die Handhabungsvorrichtung kann innerhalb eines automatisierten Fertigungs- oder Montageprozesses verwendet werden, beispielsweise zum automatisierten Entnehmen von Spritzgußteilen aus Spritzgußmaschinen.

## Beschreibung

Die Erfindung betrifft eine Handhabungsvorrichtung gemäß den Oberbegriffen der Ansprüche 1 und 5.

Die hier angesprochenen Handhabungsvorrichtungen dienen zu verschiedensten Zwecken. Für die unterschiedlichen Anwendungsfälle sind verschiedene Bewegungen bzw. Bewegungskombinationen erforderlich. Üblicherweise sind Handhabungsvorrichtungen in bis zu sechs Freiheitsgraden, nämlich in linearer Richtung in X-, Y- und Z-Richtung sowie rotatorisch um die vorgenannten Achsen in A-, B- und C-Richtung bewegbar. Um den verschiedenen Anforderungen hinsichtlich der Freiheitsgrade eines Greifmittels für den betreffenden Einsatzfall gerecht zu werden, müssen bei den bisher bekannten Handhabungsvorrichtung jedesmal umfassende Änderungen vorgenommen werden. Die genannten Handhabungsvorrichtungen weisen somit den Nachteil auf, daß sie unflexibel sind und nur mit einem verhältnismäßig großen Aufwand für einen anderen Anwendungsfall umgerüstet werden können.

Der Erfindung liegt die Aufgabe zugrunde, eine Handhabungsvorrichtung zu schaffen, die mit geringem Aufwand individuell an die jeweiligen Einsatzbedingungen anpaßbar ist.

Zur Lösung dieser Aufgabe weist die erfindungsgemäße Handhabungsvorrichtung die Merkmale des Anspruchs 1 auf. Dadurch, daß das Tragrohr aus mehreren lösbar miteinander verbundenen Teilen besteht, sind auch Einzelteile des Tragrohrs separat austauschbar bzw. ergänzbar, so daß die Handhabungsvorrichtung individuell an gewünschte Einsatzbedingungen anpaßbar ist, ohne die gesamte Handhabungsvorrichtung verändern zu müssen. Des weiteren ist die Handhabung insbesondere bei Auf- oder Umrüstvorgängen durch den modularen Aufbau des Tragrohrs wesentlich erleichtert. Weiterhin ist durch die modulare Bauweise des Tragrohrs ist eine kostengünstige Herstellung der Handhabungsvorrichtung möglich.

In einer vorteilhaften Weiterbildung der Erfindung ist im Bereich einer Verbindungsstelle zweier Teile des Tragrohrs ein Drehorgan zugeordnet, durch das eine Drehung eines Teils des Tragrohrs mit dem Greifmittel um eine Längsachse des Tragrohrs ermöglicht ist.

Bei einem bevorzugten Ausführungsbeispiel der Handhabungsvorrichtung ist das Drehorgan durch eine Hohlwelle antreibbar, wobei die Hohlwelle durch das Tragrohr hindurch verläuft. Dadurch ist die Hohlwelle platzsparend in das Tragrohr integriert. Des weiteren sind Versorgungsleitungen innerhalb der Hohlwelle hindurchleitbar, so daß diese von dem Verfahr- und Schwenkbereich des Greifmittels ferngehalten sind.

Zur Lösung der oben genannten Aufgabe weist die erfindungsgemäße Vorrichtung weiterhin die Merkmale des Anspruchs 5 auf. Dadurch, daß das Druckmittelorgan als Teil des Tragrohrs ausgebildet ist, ist eine besonders kompakte Bauweise der Handhabungsvorrichtung erzielbar. Das Druckmittelorgan dient einerseits zur Schaffung einer weiteren Bewegung des Greifmittels und andererseits bildet es gleichzeitig eines Teil des Tragrohres.

In einem bevorzugten Ausführungsbeispiel der Erfindung ist ein Zylinder des Druckmittelorgans lösbar an einem Längsrohr des Tragrohrs angeordnet, so daß der Zylinder einen Teil des Tragrohres bildet. Dadurch ist das Druckmittelorgan unabhängig vom restlichen Teil des Tragrohrs, nämlich des Längsrohrs, austauschbar.

Erfindungsgemäß ist eine Kolbenstange des Druckmittelorgans hohl ausgebildet, so daß Versorgungsleitungen durch die Kolbenstange hindurchführbar sind. Durch diese platzsparende Anordnung der Versorgungsleitungen ist eine kompakte Bauweise der Handhabungsvorrichtung erzielbar. Des weiteren ist durch die verdeckt geführten Versorgungsleitungen die Handhabung der Vorrichtung erleichtert, da Schläuche, Kabel oder dergleichen aus dem Verfahr- und Schwenkbereich des Tragrohrs entfernt sind.

In einer besonders vorteilhaften Ausgestaltung der Erfindung ist innerhalb des Tragrohrs eine Welle angeordnet, zur stufenlosen Bewegung des Greifmittels. Dadurch sind auch Zwischenstellungen im Schwenkbereich des Greifmittels anfahrbar.

Bevorzugte Weiterbildungen der Erfindung ergeben sich aus den Unteransprüchen und der Beschreibung.

Nachfolgend werden bevorzugte Ausführungsformen der Erfindung anhand der Zeichnungen erläutert. In der Zeichnung zeigen:
- Fig. 1: eine Seitenansicht einer Handhabungsvorrichtung im Teilschnitt,
- Fig. 2: eine Vorderansicht eines Druckmittelorgans mit Greifmittel in schematischer Darstellung mit hochgefahrener Kolbenstange,
- Fig. 3: Druckmittelorgan gemäß Fig. 2 mit heruntergefahrener Kolbenstange,
- Fig. 4: eine Seitenansicht eines Details des Druckmittelorgans,

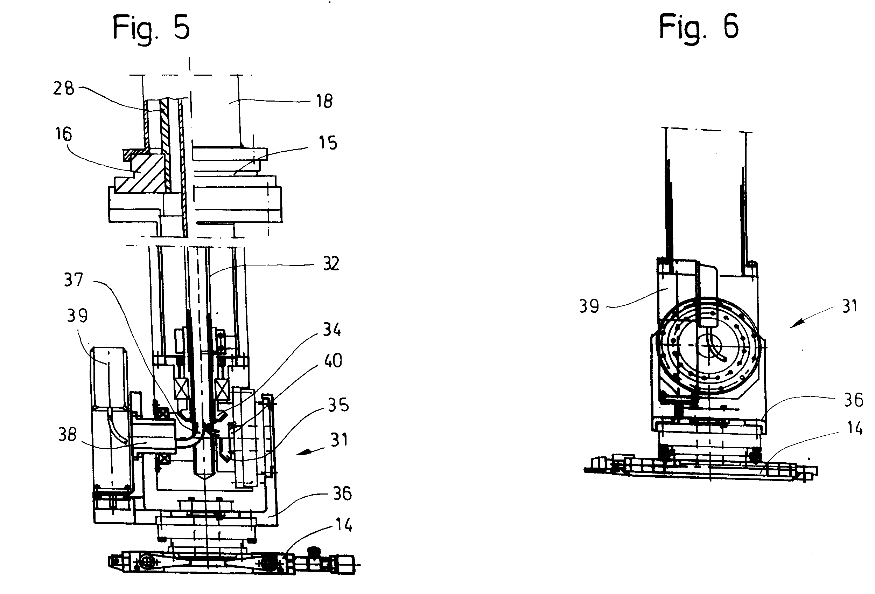

- Fig. 5: eine Vorderansicht eines anderen Ausführungsbeispiels der Handhabungsvorrichtung, und
- Fig. 6: eine Vorderansicht der Handhabungsvorrichtung gemäß Fig. 5.

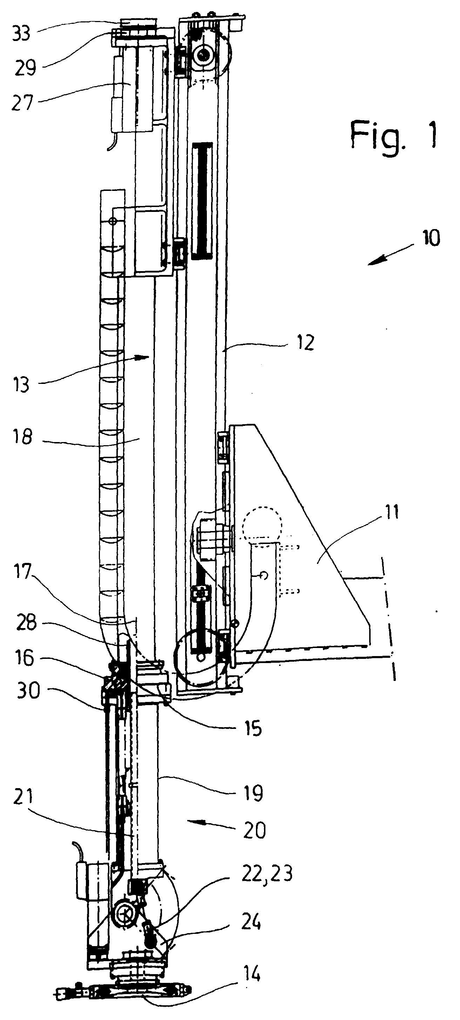

Die in Fig. 1 gezeigte Handhabungsvorrichtung 10 dient vorzugsweise zum automatisierten Entnehmen von Spritzgußteilen aus Spritzgußmaschinen.

Die Handhabungsvorrichtung 10 weist ein Gestell 11 auf, mit dem diese im Bereich einer Maschine, insbesondere auf einer Oberseite einer Spritzgußmaschine, angeordnet ist. An dem Gestell 11 ist ein verfahrbarer Schlitten 12 angeordnet, der durch nicht gezeigte Antriebe in vertikaler Richtung auf- und abbewegbar ist. An dem Schlitten 12 ist wiederum ein Tragrohr 13 in der gleichen Bewegungsrichtung wie der Schlitten 12 auf- und abbewegbar angeordnet. Durch die teleskopartige Anordnung des Tragrohrs 13 ist ein großer Verfahrweg in vertikaler Richtung geschaffen. Das Tragrohr 14 ist somit einfach in vertikaler Richtung zwischen geöffnete Formhälften der Spritzgußmaschine verfahrbar.

Dem Tragrohr 13 ist ein Greifmittel zugeordnet, mit dem die zu entnehmenden Spritzgußteile aus der Spritzgußmaschine automatisiert entnehmbar sind. Das Greifmittel ist in eine Greifmittelspanneinrichtung 14 einsetzbar und mit geringem Aufwand gegen weitere Greifmittel, z.B. Zangen, Sauger oder dergleichen, austauschbar Neben dem bereits beschriebenen Bewegungsablauf in vertikaler Richtung, nämlich in Y-Richtung, kann die Handhabungsvorrichtung zusätzlich in zwei weiteren Achsen, nämlich in Z- und X-Richtung durch ebenfalls nicht dargestellte Antriebe verfahrbar sein. Des weiteren besteht auch die Möglichkeit, daß das Greifmittel um die X-, Y- und/oder Z-Achsen, nämlich in A-, B- und/oder C-Richtung, drehbar ist.

Beim Ausführungsbeispiel gemäß Fig. 1 besteht das Tragrohr 13 aus zwei lösbar miteinander verbundenen Teilen. Im Bereich einer Verbindungsstelle 15 der zwei Teile des Tragrohrs 13 ist diesem ein Drehorgan 16 zugeordnet. Das Drehorgan 16 dient zur Drehung des Greifmittels um eine Längsachse 17 des Tragrohrs 13. Die Längsachse 17 erstreckt sich in Y-Richtung. Das modular aufgebaute Tragrohr 13 bzw. alle Teile des Tragrohrs 13 liegen mit ihren Längsmittelachsen auf der gemeinsamen Längsachse 17 des Tragrohrs 13.

Das Tragrohr 13 gemäß der Fig. 1 besteht aus einem Längsrohr 18 und einem Zylinder 19 als Teil eines Pneumatikzylinders 20. Das Längsrohr 18 und der Zylinder 19 sind lösbar miteinander verbunden (angeflanscht). Der Zylinder 19 setzt das Längsrohr 18 in Längsrichtung desselben fort und bildet einen integralen Bestandteil des Tragrohrs 13. Der Pneumatikzylinder 20 weist neben dem Zylinder 19 eine Kolbenstange 21 auf. Die Kolbenstange 21 des Pneumatikzylinders 20 ist über zwei Pleuelstangen 22, 23 mit einer Schwenkplatte 24 verbunden. An der Schwenkplatte 24 wiederum ist das Greifmittel über die Greifmittelspanneinrichtung 14 fest - aber lösbar - angeordnet. Alternativ ist es auch denkbar, daß das Greifmittel direkt mit den Pleuelstangen 22, 23 verbunden ist.

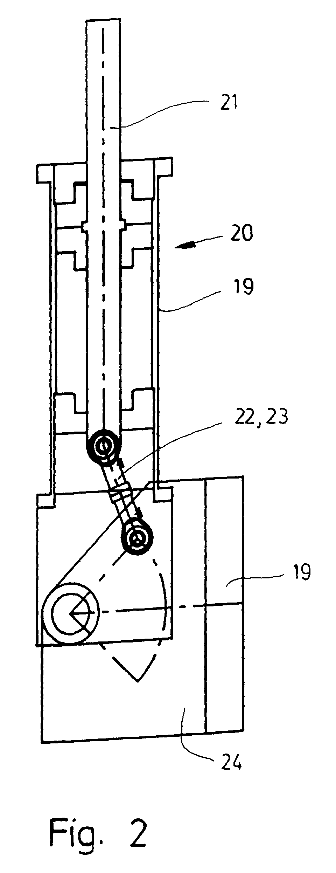

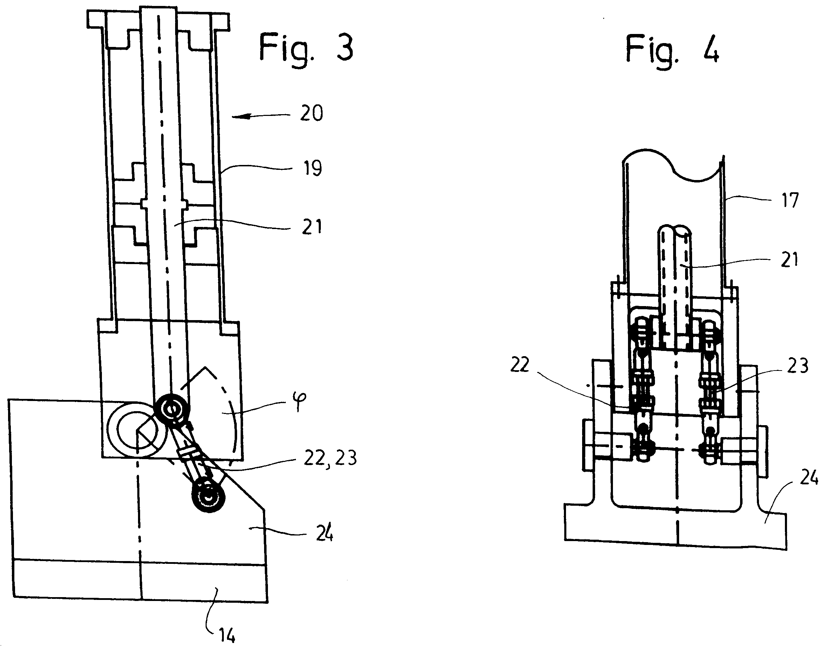

Einzelheiten hinsichtlich des Aufbaus und der Anordnung der Greifmittelspanneinrichtung 14 an dem Pneumatikzylinder 20 gehen insbesondere aus den Fig. 2 bis 4 hervor. In der Stellung gemäß Fig. 2 ist die Kolbenstange 21 maximal nach oben verfahren. Durch Betätigung des Pneumatikzylinders 20 ist die Kolbenstange 21 in eine untere Position verfahrbar (Fig. 3). Die über die Kolbenstange 21 betätigbaren Pleuelstangen 22, 23 verschwenken die Schwenkplatte 24 in eine Position gemaß Fig. 3. Der Schwenkbereich ϕ beträgt etwa 90°. Das Verschwenken der Schwenkplatte 24 und damit des mit der Schwenkplatte 24 verbundenen Greifmittels erfolgt um die Z-Achse. Der Pneumatikzylinder 20 gewährleistet also eine pneumatische Bewegung in C-Richtung. Zum Verschwenken des Greifmittels ist die Kolbenstange 21 in Längsrichtung des Tragrohrs 13 innerhalb desselben auf- und abbewegbar. Die Kolbenstange 21 ist hohl ausgebildet, so daß Versorgungsleitungen 26 innerhalb der Kolbenstange 21 angeordnet sind.

Die Drehbewegung des Greifmittels um die Y-Achse (Drehung in B-Richtung) erfolgt durch einen Antrieb 27, der auf der dem Greifmittel gegenüberliegenden Seite des Tragrohrs 13 angeordnet ist. Der Antrieb 27 treibt ein Antriebsorgan, beispielsweise ein nicht dargestelltes Zahnrad an, das wiederum ein mit einer Hohlwelle 28 verbundenes Antriebsorgan 29 antreibt. Die Hohlwelle 28 ist durch das Längsrohrs 18 hindurchführbar, derart, daß es an mindestens einer Seite des Längsrohres 18 herausragt. Mittels eines Getriebes 30 ist die Drehung der Hohlwelle 28 auf den Pneumatikzylinder 20 bzw. auf den Zylinder 19 übertragbar. Die Hohlwelle 28 tritt aus dem Längsrohr 18 an der dem Greifmittel gegenüberliegenden Seite heraus. Dem freien Ende der Hohlwelle 28 ist das Antriebsorgan 29 zugeordnet.

Sämtliche Antriebe sind separat, entsprechend den gewünschten Bewegungsrichtungen des Greifmittels ein- und/oder ausbaubar. Es ist also nicht erforderlich, stets sämtliche Antriebe an der Handhabungsvorrichtung 10 zu montieren.

In einem zweiten Ausführungsbeispiel einer Handhabungsvorrichtung 10 ist dem Längsrohr 18 anstelle des Pneumatikzylinders 20 eine Verschwenkeinrichtung 31 zugeordnet. Die Verschwenkeinrichtung 31 ist an dem Längsrohr 18 angeflanscht und durch das Drehorgan 16 ebenfalls um die Y-Achse verdrehbar.

Innerhalb der Hohlwelle 28 zum Antrieb des Drehorgans 16 ist eine zweite Hohlwelle 32 angeordnet, wobei die Hohlwelle 32 durch die Hohlwelle 28 hindurchgeführt ist. Die Hohlwelle 32 ragt aus dem Längsrohr 18 bzw. aus der Hohlwelle 28 auf der dem Greifmittel gegenüberliegenden Seite heraus. Der Hohlwelle 32 ist ebenfalls an dem freien, aus der Hohlwelle 28 herausragenden Ende ein Antriebsorgan 33 zum unabhängigen Betrieb, nämlich zum Verschwenken des Greifmittels um die Z-Achse (in C-Richtung) zugeordnet. Die Hohlwelle 32 treibt ihrerseits Kegelräder 34, 35 an. Über ein Getriebe ist die Drehbewegung der Hohlwelle 32 über die Kegelräder 34, 35 auf eine Schwenkplatte 36 übertragbar. Das Greifmittel ist wiederum verdrehsicher an der Schwenkplatte 36 angeordnet, so daß das Greifmittel die Bewegungen der Schwenkplatte 36 in gleicher Weise ausführt. Durch eine sogenannte CNC-Servoachse ist das Greifmittel stufenlos verschwenkbar, derart, daß es in jeder beliebigen Position des Schwenkbereichs positionierbar ist. Dadurch erhöhen sich die Einsatzmöglichkeiten des Greifmittels.

Innerhalb der Hohlwelle 32 sind Versorgungsleitungen 37 angeordnet. Die Versorgungsleitungen 37 führen in die Hohlwelle 32 hinein bzw. treten an einem nach unten offenen Ende der Hohlwelle 32 aus dieser heraus. Ein Teil der Versorgungsleitungen 37 ist durch eine Hohlbuchse 38 zu einem Antrieb 39 geführt. Ein anderer Teil der Versorgungsleitungen 37 ist durch eine Durchgangsöffnung 40 nach außen geführt.

Durch den modularen Aufbau des Tragrohrs 13 sowie das individuelle Implementieren von Antrieben für die gewünschten Bewegungsrichtungen bzw. Drehbewegungen ist die Handhabungsvorrichtung 10 für jede gewünschte Einsatzmöglichkeit einfach und kostengünstig abrüst- oder aufrüstbar.

### Bezugszeichenliste:

- 10: Handhabungsvorrichtung
- 11: Gestell
- 12: Schlitten
- 13: Tragrohr
- 14: Greifmittelspanneinrichtung
- 15: Verbindungsstelle
- 16: Drehorgan
- 17: Längsachse
- 18: Längsrohr
- 19: Zylinder
- 20: Pneumatikzylinder
- 21: Kolbenstange
- 22: Pleuelstange
- 23: Pleuelstange
- 24: Schwenkplatte
- 26: Versorgungsleitung
- 27: Antrieb
- 28: Hohlwelle
- 29: Antriebsorgan
- 30: Getriebe
- 31: Verschwenkeinrichtung
- 32: Hohlwelle
- 33: Antriebsorgan
- 34: Kegelrad
- 35: Kegelrad
- 36: Schwenkplatte
- 37: Versorgungsleitung
- 38: Hohlbuchse
- 39: Antrieb
- 40: Durchgangsöffnung

## Patentansprüche

1. Handhabungsvorrichtung mit einem Tragrohr (13), an dem mindestens ein Greifmittel angeordnet ist, das in vorzugsweise mehreren Freiheitsgraden bewegbar ist, **dadurch gekennzeichnet,** daß das Tragrohr (13) aus mehreren lösbar miteinander verbundenen Teilen besteht.

2. Handhabungsvorrichtung nach Anspruch 1, dadurch gekennzeichnet, daß das vorzugsweise aus zwei lösbar miteinander verbundenen Teilen bestehende Tragrohr (13) an einem Schlitten (12) verfahrbar angeordnet ist.

3. Handhabungsvorrichtung nach einem der vorgehenden Ansprüche, dadurch gekennzeichnet, daß der Schlitten (12) in der gleichen Bewegungsrichtung wie das Tragrohr (13) verfahrbar an einem Gestell (11) angeordnet ist.

4. Handhabungsvorrichtung nach einem der vorhergehenden Ansprüche, dadurch gekennzeichnet, daß das Greifmittel an einem Teil des Tragrohres (13) angeordnet ist.

5. Handhabungsvorrichtung mit einem Tragrohr (13), an dem mindestens ein Greifmittel angeordnet ist, das in vorzugsweise mehreren Freiheitsgraden bewegbar ist, wobei dem Tragrohr (13) ein Druckmittelorgan zugeordnet ist, dadurch gekennzeichnet, daß das Druckmittelorgan als Teil des Tragrohres (13) ausgebildet ist.

6. Handhabungsvorrichtung nach Anspruch 5, dadurch gekennzeichnet, daß das Tragrohr aus einem Längsrohr (18) und einem Teil des Druckmittelorgans gebildet ist.

7. Handhabungsvorrichtung nach einem der vorhergehenden Ansprüche, dadurch gekennzeichnet, daß der Teil des Druckmittelorgans das Längsrohr (18) in Längsrichtung fortsetzt, vorzugsweise ein Zylinder (19) des Druckmittelorgans einen Teil des Tragrohres (13) bildet, und der Zylinder (19) insbesondere lösbar am Längsrohr (18) angeordnet ist.

8. Handhabungsvorrichtung nach einem der vorhergehenden Ansprüche, dadurch gekennzeichnet, daß dem Tragrohr (13) vorzugsweise im Bereich einer Verbindungsstelle (15) zweier Teile des Tragrohres (13) ein Drehorgan (16) zugeordnet ist, insbesondere zur Drehung des Greifmittels um eine Längsachse (17) des Tragrohres (13).

9. Handhabungsvorrichtung nach Anspruch 8, dadurch gekennzeichnet, daß das Drehorgan durch eine Hohlwelle (28) antreibbar ist, wobei die Hohlwelle (28) durch das Tragrohr (13) hindurchgeleitet ist.

10. Handhabungsvorrichtung nach einem der vorhergehenden Ansprüche, dadurch gekennzeichnet, daß die Längsmittelachsen aller Teile des Tragrohres (13) auf der gemeinsamen Längsachse (17) desselben liegen.

11. Handhabungsvorrichtung nach einem der vorhergehenden Ansprüche, dadurch gekennzeichnet, daß das Druckmittelorgan als Pneumatikzylinder (20) ausgebildet ist, wobei dem Zylinder (19) eine Kolbenstange (21) zugeordnet ist, die in Längsrichtung des Tragrohres (13) innerhalb desselben auf- und abbewegbar ist, und daß vorzugsweise die Kolbenstange (21) hohl ausgebildet ist, derart, daß Versorgungsleitungen (26) durch die Kolbenstange (21) hindurchleitbar sind.

12. Handhabungsvorrichtung nach einem der vorhergehenden Ansprüche, dadurch gekennzeichnet, daß die Kolbenstange (21) des Pneumatikzylinders (20) über mindestens eine Pleuelstange (22, 23) mit einer Schwenkplatte (24) verbunden ist.

13. Handhabungsvorrichtung nach einem der vorhergehenden Ansprüche, dadurch gekennzeichnet, daß das Greifmittel über eine Greifmittelspanneinrichtung (14) mit der Schwenkplatte (24) verbunden ist.

14. Handhabungsvorrichtung nach einem der vorhergehenden Ansprüche, dadurch gekennzeichnet, daß dem Tragrohr (13) vorzugsweise mehrere Antriebe zugeordnet sind, wobei die Antriebe entsprechend den gewünschten Freiheitsgraden des Greifmittels separat ein- und/oder ausbaubar sind.

15. Handhabungsvorrichtung insbesondere nach Anspruch 1 oder einem der weiteren Ansprüche, dadurch gekennzeichnet, daß innerhalb des Tragrohres (13) mindestens eine Welle angeordnet ist zur stufenlosen Bewegung des Greifmittels.

16. Handhabungsvorrichtung nach einem der vorhergehenden Ansprüche, dadurch gekennzeichnet, daß die Welle als Hohlwelle (32) ausgebildet ist, wobei vorzugsweise die Hohlwelle (32) durch die Hohlwelle (28) zum Antrieb des Drehorgans (16) hindurchgeführt ist.

17. Handhabungsvorrichtung nach einem der vorhergehenden Ansprüche, dadurch gekennzeichnet, daß dem Tragrohr (13) mindestens ein Antrieb (27) zum Antreiben der Hohlwellen (28, 32) zugeordnet ist, wobei der Antrieb (27) unabhängig vom Tragrohr (13) ein- und ausbaubar ist.
